# EUROPEAN PATENT APPLICATION

(11) **EP 4 306 340 A1**
(43) Date of publication of application: **17.01.2024**
(21) Application number: 22766998.3
(22) Date of filing: 03.03.2022
(51) Int. Cl.: B60D 1/00, B60P 3/00, B62B 5/00, B65G 1/00

(54) **LOAD TRANSPORT DEVICE**

(30) Priority: 12.03.2021 SG 10202102547V
(71) Applicant: OMRON Corporation, Kyoto 600-8530 (JP)
(72) Inventor: VANGAL RAMAMURTHY, Swaminathan, Singapore 119968 (SG); NAGARAJAN, Raja, Singapore 119968 (SG); JAYARAMAN, Rajaram, Singapore 119968 (SG); RAMALINGAM, Pragaasam, Singapore 119968 (SG)
(74) Representative: HGF
(86) International application number: PCT/JP2022/009207
(87) International publication number: WO 2022/191040

(57) **Abstract**

An apparatus for transporting a load comprising: a power supply; one or more parts for mobility; a driving mechanism for driving the one or more parts for mobility; a body comprising a central wall, a first side wall and a second side wall, wherein the first side wall and the second side wall extend away from the central wall such that the central wall, the first side wall and the second side wall form a boundary defining a space for residing a load or a portion thereof; an attachment mechanism for attaching to the load, wherein the attachment mechanism comprises a first attachment member mounted to the surface of the first side wall and a second attachment member mounted to the surface of the second side wall; and a processor configured to activate the driving mechanism to move the apparatus to transport the attached load to an intended location.

## Description

### TECHNICAL FIELD

The present invention relates to an apparatus for transporting a load. The apparatus may be an autonomous mobile robot and the load may be a payload in an industry.

### BACKGROUND ART

Autonomous mobile robots can be used to perform tasks like transportation of loads (or payloads), and are capable of receiving instructions to move between instructed locations.

For example, a load may be towed as a trailer in the rear of a mobile robot. However, there may be a safety issue that the load trailing in the rear of the mobile robot may collide with objects in the environment during transportation.

In some cases, the load to be transported may require human intervention to be mounted to each mobile robot in order for the load to be transported. It takes effort to have the load manually mounted to the mobile robot.

Modifications may be required at the load's end to enable the mobile robot to transport the load. For example, the load may be mounted or placed on a moveable cart or trolley and the mobile robot is configured to engage the moveable cart or trolley to transport the load. It takes effort to make such modifications. Furthermore, different loads can have different shapes and sizes. It can be quite challenging to make a mobile robot with a standard design work with different loads with different shapes and sizes.

### SUMMARY OF THE INVENTION

According to an example of the present disclosure, there are provided an apparatus for transporting a load, as claimed in the independent claims. Some optional features are defined in the dependent claims.

### BRIEF DESCRIPTION OF THE DRAWINGS

Fig. 1 illustrates, according to a first example of the present disclosure, a mobile robot for transporting a load.
Fig. 2 shows a top view of the mobile robot of Fig. 1 with no load attached to the mobile robot.
Fig. 3 shows a top view of the mobile robot of Fig. 1 with a load (or payload) attached to the mobile robot.
Fig. 4 shows a front perspective view of the mobile robot of Fig. 1.
Fig. 5 shows a rear perspective view of the mobile robot of Fig. 1, revealing examples of front and side clamps for engaging a load.
Fig. 6 shows an example of the load of Fig. 3 to be engaged with the mobile robot of Fig. 1 and to be transported by the mobile robot.
Fig. 7 shows the load of Fig. 6 engaged with the mobile robot of Fig. 1 and to be transported by the mobile robot.
Fig. 8 shows, according to a second example of the present disclosure, a mobile robot for transporting a load, wherein a front portion of the mobile robot is facing the load.
Fig. 9 shows the mobile robot of Fig. 8 moved into a position with a rear portion of the mobile robot facing the load of Fig. 8.
Fig. 10 shows a front perspective view of the mobile robot of Fig. 8 reversing to engage the load of Fig. 8.
Fig. 11 shows a rear perspective view of the mobile robot of Fig. 8 reversing to engage the load of Fig. 8, with parts of the load removed to reveal more details.
Fig. 12 shows a front perspective view of the mobile robot of Fig. 8 fully reversed and engaged to the load of Fig. 8, with a cover deliberately removed to reveal details of a locking mechanism.
Fig. 13 shows a rear view of the mobile robot of Fig. 8 fully reversed and engaged to the load of Fig. 8, revealing extended side clamps and a charging port.
Fig. 14 is an enlarged view showing the interior of the locking mechanism of Fig. 12 for locking the load of Fig. 8 to the mobile robot of Fig. 8.
Fig. 15 shows a rear view of the mobile robot of Fig. 8 and an enlarged view of a segment of a side clamp of the mobile robot.
Fig. 16 shows a front view of the mobile robot of Fig. 8 and an enlarged view of a power supply charging station docked to the charging port of the mobile robot of Fig. 8.

### DETAILED DESCRIPTION

Examples of the present disclosure relate to apparatuses such as autonomous mobile robots. Each mobile robot may be configured to engage to a load, which can be machinery or equipment. After engagement to the load, the mobile robot may transport the load to an intended location according to instructions (software code) as programmed for the mobile robot. Another equivalent term used in the present disclosure to refer to such load is "payload". In an example, the load may be a payload of a production line, a medical facility, an office environment, a food and beverage premise, a warehouse, a retail location, a hospitality premise, and the like.

The mobile robot can transport a payload in one of three ways as follows:
1) The payload is mounted on the robot's top surface and the payload's entire weight is carried by the robot.
2) The payload is mounted on the robot's top surface and the payload has castors wheels (or other similar moving parts like tracks) that extend downwards to contact the ground. The castor wheels move on the ground as the mobile robot is transporting the payload. Hence, the payload's weight is supported by the mobile robot and the castor wheels.
3) The payload is resting entirely on the ground and is pulled along by the mobile robot. For example, the payload is like a trailer being pulled at the rear of the mobile robot.

With regard to item 1 above, the payload cannot be easily removed and replaced with another payload on a mobile robot. Typically, human intervention is required for such removal and replacement.

With regard to items 2 and 3 above, human intervention is not required and the payload can be configured to be autonomously swapped between mobile robots depending on the application. The mobile robot can be programmed to change a payload that is engaged to the mobile robot to another payload. For users who want to deploy a mobile robot to handle a variety of tasks, a mobile robot that can accommodate different payloads and can swap or change the payload carried by the mobile robot easily is desirable. Examples of the present disclosure aim to provide such desirable mobile robot.

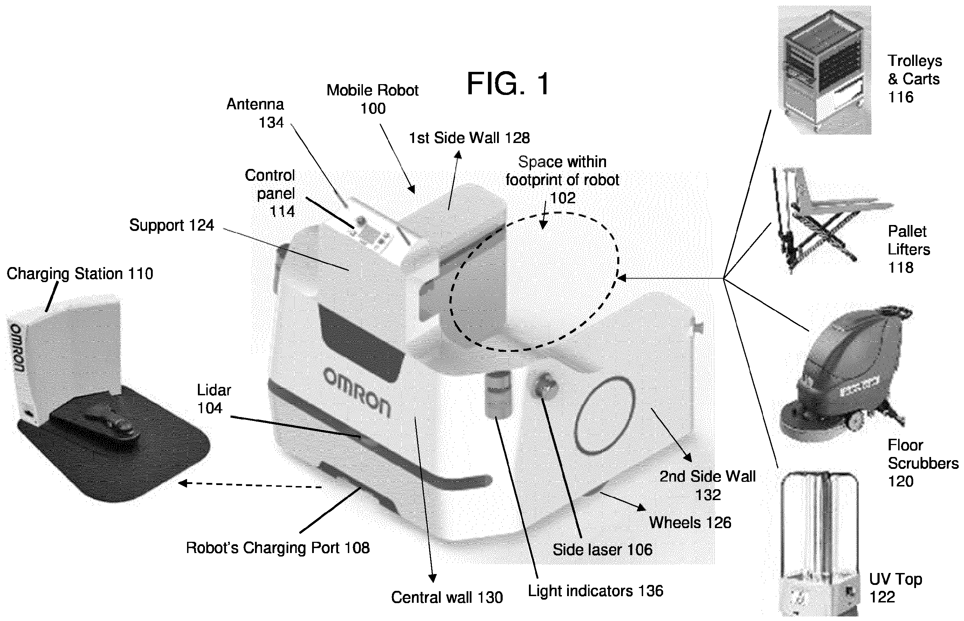

In an example of the present disclosure, with reference to Fig. 1, there is provided an apparatus for transporting a load (or payload). The apparatus of the present example is a mobile robot 100. The mobile robot 100 has a unique shape. The mobile robot 100 can autonomously navigate to a payload (e.g. 116, 118, 120 or 122), attach to the payload, optionally supply power from the mobile robot 100 to the payload, optionally control the payload, and detach from the payload. The unique shape of the mobile robot 100 enables the payload to fit compactly within a footprint of the mobile robot 100 and fully utilize the volume within the footprint.

The mobile robot 100 also has a power supply (e.g. a battery) residing within a housing of the mobile robot 100, one or more parts for mobility, such as one or more wheels 126 (or alternatively, tracks), and a driving mechanism (residing within the housing) such as a motor for driving the one or more parts for mobility 126 to move the mobile robot 100. With regard to the driving mechanism and the one or more parts for mobility 126, they can be configured to have a differential drive type of steering and/or be implemented using other suitable driving/steering methods like 4-wheel drive. The driving mechanism can be powered by the power supply.

Examples of the load (or payload) to be transported by the mobile robot may be a trolley or moveable cart 116 for carrying one or more objects. The load may comprise a lifting device such as pallet lifter 118 (which can be a jack) for lifting an object. The load may comprise a cleaning device for cleaning surfaces in an environment and the load is to be towed by the mobile robot to clean the surfaces of the environment. In one example, the cleaning device may be a floor scrubber 120 to be towed by the mobile robot to scrub the floor. The load may comprise an Ultraviolet (UV) illumination top 122 for sanitization using UV. The load may only have just the aforementioned features providing the stated function, or a combination of the features providing more than one of the stated functions (i.e. carry and lift objects, cleaning and sanitization). It should be appreciated that other types of load not specified above but are suitable for use with the mobile robot 100 are also applicable, for example, a manufacturing machine with a specific function in a manufacturing process that is used in a production line.

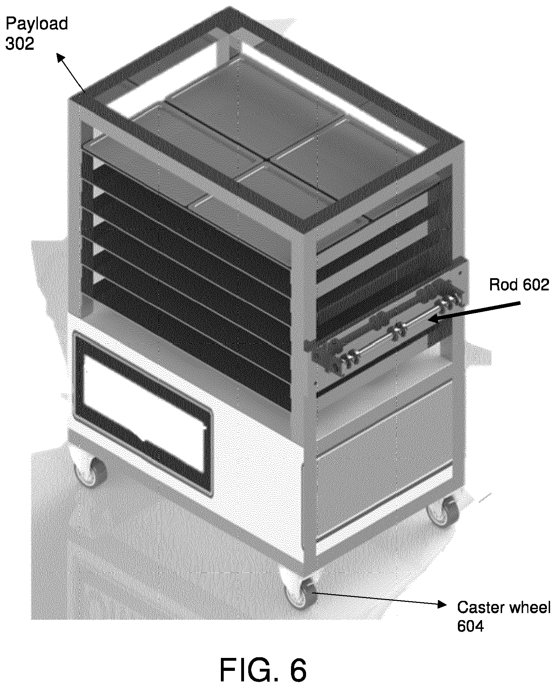

With reference to Fig. 6, an example of the load, such as a payload 302 (in this example, a trolley) that can work with the mobile robot 100 shown in Figs. 1 to 5 is shown. Fig. 6 illustrates that the load can comprise one or more parts for mobility (e.g. wheels, tracks etc.). Specifically, castor wheels 604 are mounted to the payload 302 to facilitate transportation of the payload 302 by the mobile robot 100 of Fig. 1.

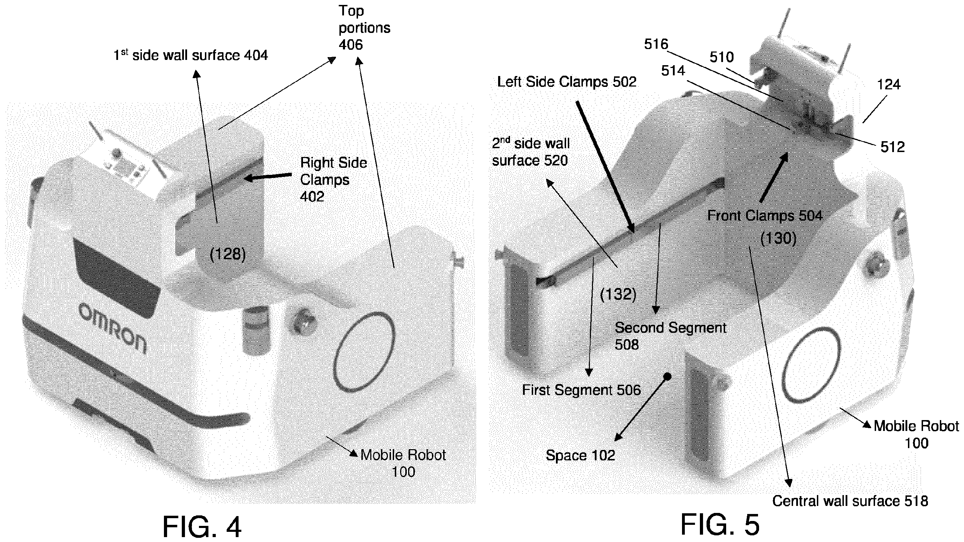

With reference to Figs. 1, 4 and 5, the mobile robot 100 has a body comprising a central wall 130, a first side wall 128 and a second side wall 132. The first side wall 128 and the second side wall 132 extend away from the central wall 130 such that a surface 518 in Fig. 5 of the central wall 130, a surface 404 in Fig. 4 of the first side wall 128 and a surface 520 in Fig. 5 of the second side wall 132 form a boundary defining a space 102 for residing the load (e.g. 116, 118, 120, or 122 in Fig. 1 or 302 in Fig. 6) or a portion of the load. In this manner, the central wall 130, the first side wall 128 and the second side wall 132 of the mobile robot 100 create the boundary, which is only open on the side for the load to enter the enclosure, for the load to fit into the footprint of the mobile robot 100. Top portions 406 in Fig. 4 of the first side wall 128 and the second side wall 132 may be configured as a platform for receiving the load or a portion of the load.

With reference to Figs. 1 to 5, a specific example may be that the surface 518 in Fig. 5 of the central wall 130, the surface 404 in Fig. 4 of the first side wall 128 and the surface 520 in Fig. 5 of the second side wall 132 form a U (or C) shape.

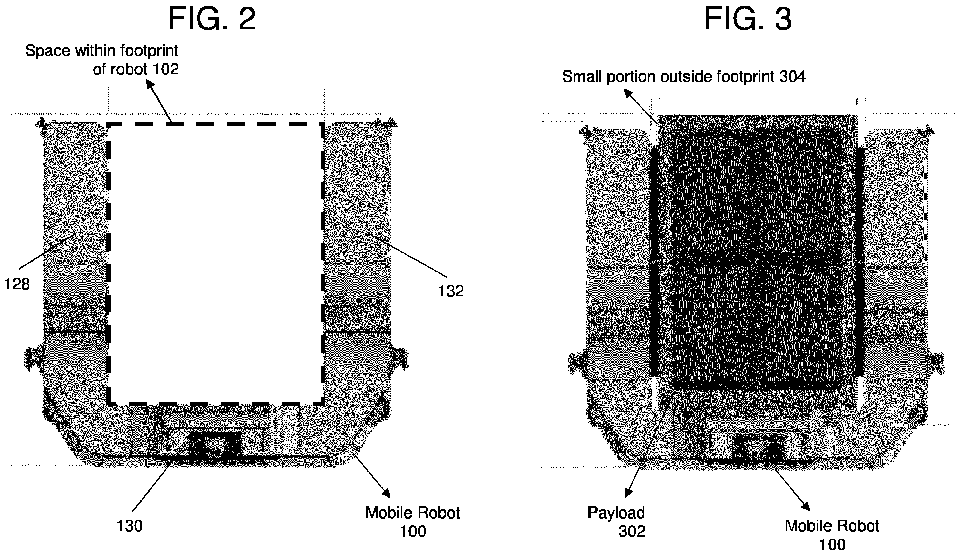

With reference to Figs. 2 and 3, the U shape is clearly shown in top views of the mobile robot 100. Fig. 2 shows the space 102 (marked out using broken lines) within the footprint of the mobile robot 100. With reference to Fig. 3, the payload 302 of Fig. 6 is able to fit into the space 102 substantially with only a small portion 304 of the payload 302 not within the footprint of the mobile robot 100. In this case in which the payload 302 is substantially within the footprint and also in the case that the payload is entirely within the footprint, it can be said that the footprint of the mobile robot 100 is moving in the environment when the payload 302 is being transported and a central towing method with a high degree of compactness is provided.

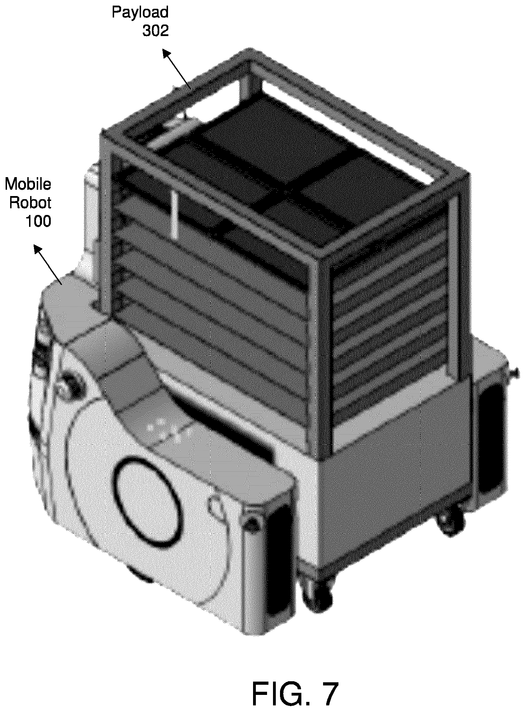

In the present example, the payload 302 is the same as the trolley or moveable cart 116 of Fig. 1. Fig. 7 shows a rear perspective view of Fig. 3. The compactness advantage of the central towing method illustrated by Figs. 3 and 7 is that the mobile robot 100 with the payload 302 can navigate tighter spaces with less risk of hitting obstacles in the environment. This solves a problem in the case in which the load is a trailer being towed in the rear of a mobile robot. It should be appreciated that in the case that only a portion of the load is able to fit into the space, the advantage of the compactness will depend on how much of the load is outside the footprint of the mobile robot 100. The lesser of the load outside the footprint, the more the compactness and the better its advantage.

In another example, specifically, the surface 518 in Fig. 5 of the central wall 130 may be orthogonal (about 90 degrees) to the surface 404 in Fig. 4 of the first side wall 128, and the surface 518 in Fig. 5 of the central wall 130 may be orthogonal (about 90 degrees) to the surface 520 in Fig. 5 of the second side wall 132, and the surface 404 in Fig. 4 of the first side wall 128 and the surface 520 in Fig. 5 of the second side wall 132 are parallel to each other, and the surface 404 in Fig. 4 of the first side wall 128 and the surface 520 in Fig. 5 of the second side wall 132 extend in a same direction away from the central wall 130.

With reference to Figs. 1, 4 and 5, the mobile robot 100 also has an attachment mechanism for attaching to the load (e.g. 116, 118, 120, or 122 in Fig. 1 or 302 in Fig. 6). The attachment mechanism comprises a pair of attachment members for engaging the load. Each of the pair of attachment members may be padded so as not to damage the load and/or to hold the load firmly through the application of friction. The pair of attachment members comprises a first attachment member 402 in Fig. 4 mounted to the surface 404 in Fig. 4 of the first side wall 128 and a second attachment member 502 in Fig. 5 mounted to the surface 520 in Fig. 5 of the second side wall 132. The pair of attachment members 402 and 502 may each be elongate in shape and extends horizontally (in a direction parallel to ground level) across each of the first side wall 128 and the second side wall 132 as shown in Fig. 5. An attachment actuator with the required electrical and/or mechanical components can be provided to move the attachment members to extend to engage the load or retract to disengage from the load. For example, a linear actuator can work with a motor provided in the mobile robot 100 to provide pushing force to push and extend each attachment member to engage the load, and also to pull and retract each attachment member to disengage from the load. A combination of pressure and friction can be exerted on the load upon engagement with the load to hold the load in place.

In the present example, the pair of attachment members can act as clamps, specifically, right side clamps 402 (i.e. first attachment member) and left side clamps 502 (i.e. second attachment member) for clamping the load (e.g. 116, 118, 120, or 122 in Fig. 1 or 302 in Fig. 6). For instance, during attachment to the load, the driving mechanism is firstly activated to move the mobile robot 100 to receive the load or the portion of the load into the space 102. Thereafter, the attachment mechanism is activated to make the first attachment member 402 and the second attachment member 502 attach to the load by moving the first attachment member 402 and the second attachment member 502 to engage opposite sides of the load or opposites sides of the portion of the load residing in the space 102, and hold the load or the portion of the load in the space 102. Hence, the first attachment member 402 and the second attachment member 502 are essentially clamping the load or the portion of the load and holding the load in position. Lateral (side) movements of the load in directions normal to the surface 404 of the first side wall 128 and the surface 520 of the second side wall 132 are prevented. Longitudinal (forward-reverse) movements of the load in directions normal to the surface 518 of the central wall 130 are also prevented.

As different loads may have different shapes and contours, in one example, the attachment mechanism may be configured to comprise more than one of the pair of attachment members For example, there may be up to 10 pairs of attachment members or even more, depending on the type of load to engage. Each of the first attachment members and the second attachment members of each of the pair of attachment members is extendable upon activation of the attachment mechanism to engage the load or the portion of the load according to the contour (or shape) of the load or the portion of the load. Each attachment member may be elongate in shape and extends horizontally (in a direction parallel to ground level) across each of the first side wall 128 and the second side wall 132 as illustrated in Fig. 5. The situation is like there are a plurality of clamp segments (each attachment member being a clamp segment). For example, Fig. 5 shows a first clamp segment 506 and a second clamp segment 508, wherein each of them can be individually extended or retracted to clamp or release a load with different distances. If a load to be transported by the mobile robot 100 has an irregular shape like, for instance, a larger rear width and a smaller front width, then a first pair of attachment members can extend for a lesser distance from the first and second side walls of the mobile robot to engage the larger rear width of the load. The second pair of attachment members can extend with longer distance from the first side wall 128 and the second side wall 132 of the mobile robot to engage the smaller front width of the load. In this manner, the attachment mechanism is configured to accommodate different shapes and contours.

The mobile robot 100 comprises a control panel 114 in Fig. 1 for user input/control of the mobile robot 100 and/or user control of a load (e.g. 116, 118, 120, or 122 in Fig. 1 or 302 in Fig. 6) attached to the mobile robot 100. The mobile robot 100 also has a support 124 extending from the body (e.g. central wall 130) to raise the control panel 114 to a predetermined height to facilitate user access. The support 124 may be part of the central wall 130 that extends upwards to facilitate user access at a top portion of the mobile robot 100.

In addition to the attachment mechanism, the mobile robot 100 may comprise a locking mechanism, which is known as front clamps 504 in Fig. 5. The locking mechanism comprises a latching member with a configuration corresponding to one or more receiving members residing in the load to facilitate the one or more receiving members to receive the latching member to lock the mobile robot to the load. This locking mechanism is optional and can be additionally provided if the attachment mechanism is not configured to have sufficiently firm attachment to the load. The mobile robot 100 is configured to be operated to move the latching member to lock the mobile robot 100 to the load. The locking mechanism prevents longitudinal (forward-reverse) movements of the load in directions perpendicular to the surface 518 of the central wall 130. Lateral (side) movements of the load in directions perpendicular to the surface 404 of the first side wall 128 and the surface 520 of the second side wall 132 are also prevented.

The support 124 may comprise the locking mechanism on the side of the surface 518 of the central wall 130 as shown in Fig. 5. In this case, the locking mechanism can be configured to engage the load once the mobile robot 100 is moved until the load or the portion of the load resides in the space 102 defined by the central wall 130, the first side wall 128 and the second side wall 132.

Specifically, Fig. 5 shows the locking mechanism having 3 latching members 510, 514 and 512 mounted in a recess 516. Each latching member 510, 514, or 512 is a hook. In this example, with reference to Fig. 6, there is provided a rod 602 as a receiving member in the payload 302 for the latching members 510, 514 and 512 to latch on to engage the payload 302 to the mobile robot 100. The latching members 510 and 512 hooks to the rod 602 from the top of the rod 602 and the latching member 512 hooks to the rod 602 from the bottom of the rod 602. Once the latching or hooking is completed, the locking is completed. The latching members 510, 514 and 512 are moveable by actuating mechanisms built in the mobile robot 100. The actuating mechanisms may operate using the principles of magnetism, wherein each latching member 510, 514 and 512 is hinged to pivot between a latch-on or a latch-off configuration and magnetism is used to push or pull metal parts to move each latching member between the latch-on or latch-off configuration.

The mobile robot 100 may comprise an electrical connector configured to connect to the load to provide power to the load when the mobile robot 100 is attached to the load. The electrical connector may comprise one latching member of the locking mechanism. In the present example, one of the latching member 510, 514 and 512 is configured to be the electrical connector and the electrical connection to supply power to the load is made when one of the latching members 510, 514 and 512 is received by the rod 602.

The electrical connector is useful for loads that need a power source to operate, for instance the pallet lifter 118 and the floor scrubber 122 in Fig. 1. Other than power, data can also be transmitted through the electrical connector by providing data communication wiring in addition to power lines. The exchanged data may comprise commands to instruct the load to lift/lower pallets (for pallet lifter 118) or turn lamps on/off (for UV Top 122) and also report the statuses of the loads.

Furthermore, the mobile robot 100 is an autonomous mobile robot that has self-navigation and/or self-mapping systems on board, and a controller or processor for controlling its movements. Wireless communication devices can be provided in the mobile robot 100 to enable wireless communication via WIFI, telecommunication networks such as 3G, 4G, 5G, and the like. Antennas 134 in Fig. 1 can be provided to enable such wireless communication. Instructions to control the tasks of the mobile robot 100 can be communicated wirelessly. The controller or processor executes instructions in a memory to operate the mobile robot 100. The controller or processor can be connected to user input devices and/or a display for displaying a graphical user interface to take in user input. User input provided via the user input devices and/or graphical user interface can comprise instructions to control the tasks of the mobile robot 100 and its movements. The control panel 114 in Fig. 1 comprises such display and the user input devices.

The mobile robot 100 can have traffic control systems to avoid collision and to optimize movements relative to other mobile robots also operating with the mobile robot 100 in the same environment. Through executing instructions by the processor, the mobile robot 100 can be operable to activate the driving mechanism to move the mobile robot 100 to transport an attached load (e.g. 116, 118, 120, or 122 in Fig. 1 or 302 in Fig. 6) to an intended location according to the instructions. For example, the intended location can be a location in a production line for loading and unloading objects (e.g. the load) and/or to undertake a specific task.

Furthermore, the mobile robot 100 can have one or more sensors. The controller or processor of the mobile robot 100 can be configured to receive input from the one or more sensors and operate the mobile robot 100 to receive input from the one or more sensors to align the mobile robot 100 with the load prior to activating the attachment mechanism to attach to the load or the portion of the load. For example, with reference to Fig. 1, the mobile robot 100 has a LiDAR sensor 104 and side lasers 106 on board. The self-navigation and/or self-mapping systems on board work with the LiDAR sensor 104 and side lasers 106 to enable the mobile robot 100 to perform self-navigation and/or self-mapping functions for autonomous movement in the surrounding environment.

The one or more sensors can be part of an existing cell alignment positioning system (CAPS) developed by Omron Corporation. CAPS uses a main safety scanning laser (i.e. the LiDAR sensor) to detect a geometry in an environment and enables a mobile robot to drive to a specific location relative to that geometry during alignment conducted by the mobile robot. Specifically, CAPS can use point data information from a planar LiDAR sensor that is built into the mobile robot to align with reference targets based on triangulation and other geometrical feature analysis. CAPS is just one method to enable the mobile robot to conduct alignment with the load. Other suitable methods can also be used.

In other examples, the one or more sensors can be or include cameras capturing images and alignment can be established based on image processing of captured images. The one or more sensors may also include laser, infrared and/or ultrasonic sensors. There may also be visual or smart labels or markers provided on the mobile robot and/or load to facilitate alignment.

Specifically, the one or more sensors may be configured to read a machine-readable optical code (e.g. QR code or barcode) and/or a Radio-Frequency Identification tag provided on the load to obtain information to facilitate attachment to the load. For example, in the case that there are more than one pairs of attachment members (e.g. the example of Fig. 5 with the first and second clamp segments 506 and 508), the information obtained can help to determine which of the more than one pairs of attachment members is to be activated to extend to contact the load or the portion of the load to fit the contour of the load or the portion of the load. The information obtained may include details on how exactly to configure the more than one pairs of attachment members to suit the contour of the load. Other information may include one or more of the type of load, function of the load, parameters/instructions to control the load, weight of the load, dimensions of the load, and more.

The one or more sensors may be configured to read the same machine-readable optical code and/or Radio-Frequency Identification tag as described above or another machine-readable optical code and/or Radio-Frequency Identification tag provided on the load to obtain location data of the load relative to the mobile robot to facilitate the alignment of the mobile robot with the load. These one or more sensors may be used separately or together with the Lidar sensor for CAPS. In the case of the use of machine-readable optical code to obtain location data, vision/image processing techniques (e.g. involving use of computer vision algorithms) may used. The vision/image processing techniques may involve use of a camera to capture an image of the machine-readable optical code and applying image analysis on the captured image to determine coordinates of the load relative to the mobile robot. An example of the vision/image processing technique is discussed in H. Zhang, C. Zhang, W. Yang and C. Chen, "Localization and navigation using QR code for mobile robot in indoor environment," 2015 IEEE International Conference on Robotics and Biomimetics (ROBIO), Zhuhai, China, 2015, pp. 2501-2506, doi: 10.1109/ROBIO.2015.7419715.

With reference to Fig. 1, the mobile robot 100 has a charging port 108 for charging up the power supply of the mobile robot 100. The mobile robot 100 is configured to autonomously move and dock with a charging station 110 to commence the charging. The charging station 110 may be connected to Alternating Current (AC) Mains supplying AC power, for instance via a wall socket.

Furthermore, with reference to Fig. 1, the mobile robot 100 has light indicators 136 for alerting and/or status notification purposes. For example, to show that error occurred, show fine or okay status, and/or show a warning of certain situation.

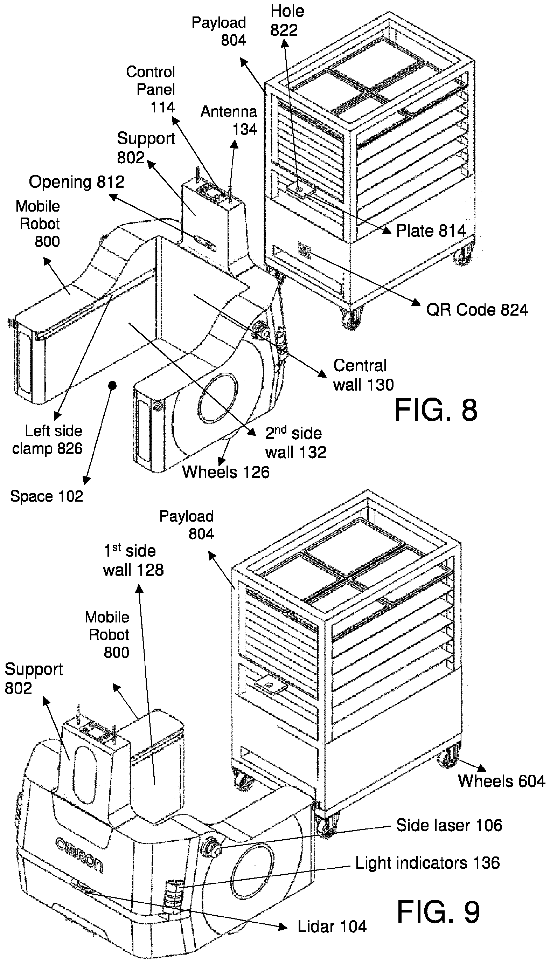

The mobile robot 100 described with reference to Fig. 1 to Fig. 7 relates to one example of the present disclosure. A mobile robot 800 shown in Fig. 8 to Fig. 16 relates to another example of the present disclosure. The mobile robot 100 is the same as the mobile robot 800 except for the features directed to the locking mechanism and the attachment members. The reference numerals of the elements in Figs. 1 to 7 that are similar to the elements in Figs. 8 to 16 are deliberately reused in Figs. 8 to 16 to show the similarity. For instance, the same elements like the antenna 134, the wheels 126 for moving the mobile robot 800, the control panel 114, the Lidar sensor 104, the side lasers 106, the light indicators 136, one or more cameras (if required), charging port 108 are also present in the mobile robot 800. Only elements in Figs. 8 to 16 that are different from the elements in Figs. 1 to 7 are given a different reference numeral.

With reference to Fig. 9, a load 804 to be attached to the mobile robot 800 is configured to work with the locking mechanism. The load 804 is a trolley with wheels 604 just like the payload 302 in Fig. 6 described earlier. The load 804 is configured to carry a plurality of trays, wherein each tray is used for carrying one or more items.

The locking mechanism of the mobile robot 800 comprises a latching member with a configuration corresponding to one or more receiving members residing in the load to facilitate the one or more receiving members to receive the latching member to lock the mobile robot 800 to the load 804. This locking mechanism is optional and can be additionally provided if the attachment mechanism of the mobile robot 800 is not configured to have sufficiently firm attachment to the load 804. The mobile robot 800 is configured to be operated to move the latching member to lock the mobile robot 800 to the load 804.

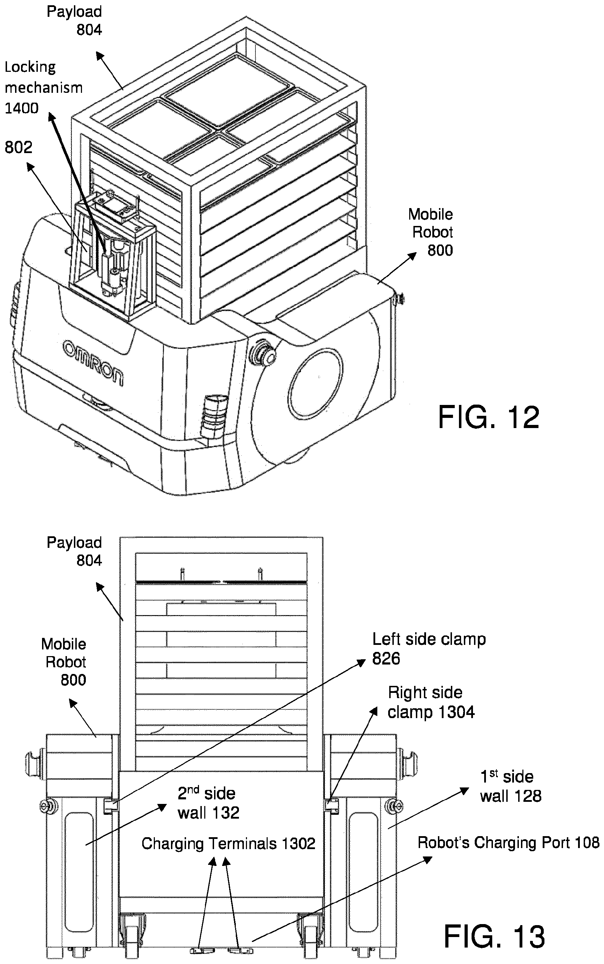

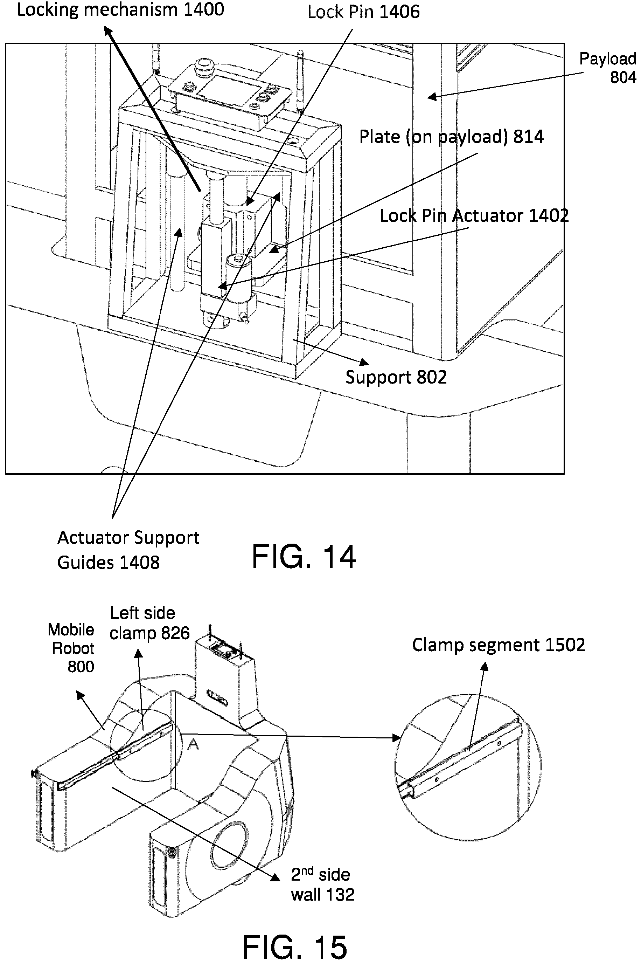

Specifically, with reference to Figs. 8, 12, and 14, the mobile robot 800 has a support 802 that comprises the locking mechanism 1400. Fig. 12 shows a front perspective view of the mobile robot 800 fully reversed and engaged to the load 804. A cover of the support 802 is removed to deliberately reveal details of the locking mechanism 1400. Fig. 14 is an enlarged view showing the interior of the locking mechanism 1400. The locking mechanism 1400 is configured to engage the load 804 once the mobile robot 100 is moved until the load 804 or the portion of the load 804 resides in the space 102 defined by the central wall 130, the first side wall 128 and the second side wall 132.

The support 802 has an opening 812 for receiving a plate 814 comprising a hole 822. The plate 814 is fixed on the load 804. Access to the locking mechanism 1400 is via the opening 812. Specifically, the locking mechanism 1400 has a latching member in the form of a lock pin 1406 and a lock pin actuator 1402 for extending the lock pin 1406 to a lock configuration and for retracting the lock pin to an unlock configuration. The plate 814 on the load 804 is a receiving member having a hole 822 (which is a slot) for receiving the lock pin 1406 when the lock pin 1406 is extended to lock the mobile robot 800 to the load 804. When the lock pin 1406 is retracted to unlock the mobile robot 800 from the load 804, the lock pin 1406 disengages from the hole 822. The lock pin actuator 1402 may operate based on principles of magnetism (e.g. solenoid lock), wherein the lock pin 1406 is actuated to move by, for instance, a solenoid within the lock pin actuator 1402.

In the present example, actuator support guides 1408 are provided for guiding the insertion of the plate 814 into the opening 812. Moving the mobile robot 800 to achieve an aligned configuration in which the hole 822 is aligned with the position of the lock pin 1406 is important for smooth locking and unlocking. The actuator support guides 1408 can be structures such as vertical poles or beams located in the support 802 to form side barriers to prevent the plate 814 from insertion into the opening 812 in a misaligned configuration. If the plate 814 is misaligned, the plate 814 will be blocked by the actuator support guides 1408 and will not be able to insert into the opening 812 to achieve the aligned configuration.

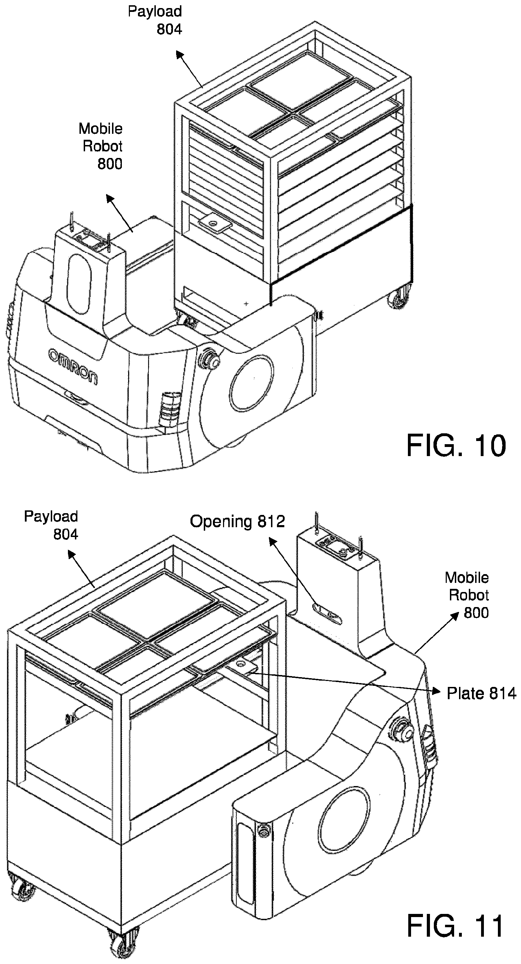

Figs. 8 to 12 illustrates an example of an attachment process of the mobile robot 800 with the load (or payload) 804. This attachment process is also applicable to the mobile robot 100 in Fig. 1. With reference to Fig. 8, the mobile robot 800 received instructions wirelessly from a central control system to attach to the load 804 to transport the load 804 to an intended location according to the instructions. Fig. 8 shows the mobile robot 800 autonomously moving towards the load 804. The mobile robot 800 detects the presence of the load 804 through load information received from the central control system, the Lidar sensor 104, and/or one or more mounted cameras scanning the environment for one or more visual markers of the load 804 such as a QR code 824. This QR code 824 is only shown in Fig. 8 for illustration purposes. Alignment of the mobile robot 800 with the load 804 may begin when detecting the presence of the load 804. Subsequently, the mobile robot 800 rotates 180 degrees to have its rear portion face the load 804 as shown in Fig. 9. The mobile robot 800 starts to reverse and move towards the load 804 to have the load 804 reside in the space 102 defined by the central wall 130, the first side wall 128 and the second side wall 132 as shown in a front perspective view in Fig. 10. Further alignment may take place during the reversing movement of the mobile robot 800 to ensure smooth engagement with the load 804. Fig. 11 shows a rear perspective view of the mobile robot 800 in Fig. 10 in the process of reversing. Several trays carried by the load 804 are deliberately removed in Fig. 11 to show more details of the mobile robot 800 and the plate 814 on the load 804 for inserting into the opening 812. Fig. 12 shows the mobile robot 800 fully reversed and engaged to the load 804. Prior to achieving the configuration of Fig. 12, the mobile robot 800 activates the attachment mechanism of the mobile robot 800 to engage the load 804, and the locking mechanism 1400 to lock the load 804 to the mobile robot 800. The cover of the support 802 in Fig. 12 is deliberately removed to show the details of the locking mechanism 1400. Once the mobile robot 800 is in the configuration of Fig. 12, the mobile robot 800 is ready to transport the load 804 to the intended location.

In the present example, when the mobile robot 800 is reversing itself to have the load 804 sufficiently reside within the space, the one or more sensors of the mobile robot 800 may be in use. For example, the use of one or more cameras and vision techniques to detect that the load 804 is sufficiently in the space, a pressure sensor to detect contact pressure of the load on the central wall 130, an infrared sensor to detect load distance from the central wall 130, use of the locking mechanism 1400 in Fig. 14 on the central wall 130 to detect load engagement with the mobile robot 800, and the like. In another example, it could be that the mobile robot 800 relies on information gathered from the one or more visual markers (e.g. machine-readable optical code) of the payload such as a QR code to determine how much to reverse and adjust itself to have the load 804 reside sufficiently in the space 102.

Fig. 13 shows a rear view of the configuration of Fig. 12, in which the mobile robot 800 is fully reversed and engaged to the load 804. Fig. 13 shows more details of the charging port 108, in particular, the charging port 108 comprises positive and negative charging terminals 1302. Fig. 13 also shows a pair of attachment members comprising a first attachment member in the form of a left side clamp 826 and a second attachment member in the form of a right side clamp 1304 extended to engage or contact opposite sides of the load 804 to clamp the load 804 between the first side wall 128 and the second side wall 132 to hold the load 804 in place.

Fig. 15 illustrates another example of the attachment mechanism that is different from the attachment mechanism of the mobile robot 100 in Fig. 1. Fig. 15 shows a rear perspective view of the mobile robot 800 without any load attached, and an enlarged view of a clamp segment 1502 of the left side clamp 826 of the mobile robot 800. A corresponding clamp segment (not shown in Fig. 15) is also provided for the right side clamp 1304 in Fig. 13. Each of the clamp segments may be elongate in shape and extends horizontally (in a direction parallel to ground level) across each of the first side wall 128 and the second side wall 132 as illustrated in Fig. 15. Notably, in the present example, there are only two clamp segments mounted to the mobile robot 800, one segment is on the first side wall 128 and the other segment is on the second side wall 132. In the example of the mobile robot 100, there are 4 clamp segments, with two of them adjacently placed on the first side wall 128 and the other two of them adjacently placed on the second side wall 132. It should be appreciated that more than one of such segments can be provided to accommodate attachment to different types of load with different shapes and contours. Similar to the attachment mechanism of the mobile robot 100 in Fig. 1, an attachment actuator with the required electrical and/or mechanical components can be provided to move the attachment members to extend to engage the load or retract to disengage from the load. For example, a linear actuator and a motor can be provided in the mobile robot 800 to provide pushing force to push and extend each attachment member to engage the load, and also to pull and retract each attachment member to disengage from the load. A combination of pressure and friction can be exerted on the load upon engagement with the load to hold the load in place.

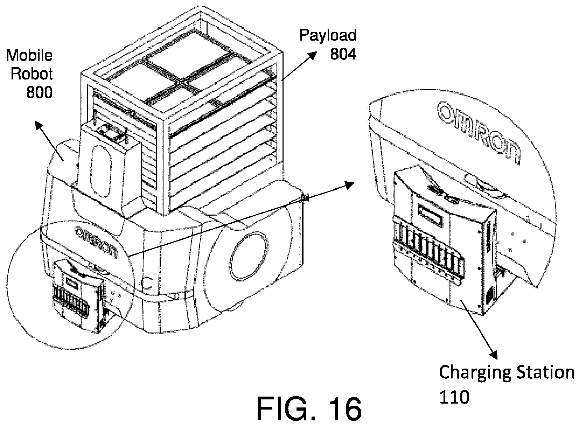

With reference to Fig. 16, the mobile robot 800 is configured to autonomously move and dock with a charging station 110 to charge up the power supply of the mobile robot 800. Similar to the case of the mobile robot 100 in Fig. 1, the charging station 110 may be connected to Alternating Current (AC) Mains supplying AC power, for instance via a wall socket.

In another example, there is provided a mobile robot (3rd example) with the same unique shape as described for the mobile robot 100 in Fig. 1 and 800 in Fig. 8. That is, like the case of the mobile robot 100 and 800, the mobile robot (3rd example) has a body comprising a central wall, a first side wall and a second side wall. The first side wall and the second side wall extend away from the central wall such that a surface of the central wall, a surface of the first side wall and a surface of the second side wall form a boundary defining a space for residing a load or a portion of the load. In the example of the mobile robot (3rd example), the load is a lifting device such as a jack that is extendable out of the space and retractable into the space. The jack is used to lift a payload, which comprises an object (e.g. a plurality of boxes) placed on a pallet. The jack in the present example has a design similar to that of a hydraulic and/or pneumatic pallet jack, which has a pair of forks for slotting underneath gaps of a pallet with a load placed on the pallet.

The mobile robot (3rd example) has an attachment mechanism comprising a pair of attachment members. A first attachment member of the pair of attachment members resides on the surface of the first side wall. A second attachment member resides on the surface of the second side wall. In the present example, unlike the case of the mobile robot 100 and 800, the pair of attachment members acts as mounting members to mount to two opposite sides of the jack. The jack is located between the first side wall and the second side wall. Unlike the mobile robot 100 and 800, the mobile robot (3rd example) does not have a locking mechanism like the front clamps 504 of Fig. 5 and the locking mechanism 1400 of Fig. 14. In one example, the mobile robot (3rd example) does not have a control panel like the control panel 114, and a support like the support 124 in Fig. 1 and 802 in Fig. 8.

It should be noted that in another example, the pair of attachment members of the mobile robot (3rd example) could be like the attachment members described for mobile robot 100 in Fig. 1 and 800 in Fig. 8, wherein instead of being mounting members, which are mounted (or fixed) to the opposite sides of the jack, the attachment members are configured to be like clamps for clamping (and not fixed to) the opposite sides of the jack.

The attachment mechanism of the mobile robot (3rd example) further comprises a pair of tracks. One of the tracks resides on the surface of the second side wall and extends horizontally (in a direction parallel to ground level) across the surface of the second side wall. The other one of the tracks is on the surface of the first side wall and extends horizontally (in a direction parallel to ground level) across the surface of the first side wall. The first and second attachment members are configured to be mounted to the pair of tracks such that the first and second attachment members are slidable along the pair of tracks. The first and second attachment members are slidable along the pair of tracks to move the attached jack residing in the space in a direction away from the central wall or towards the central wall. By moving the jack away from the central wall, the pair of forks of the jack are moved towards the payload so that the forks move into gaps of the pallet. The movement of the jack away from the central wall can be automated and activated by the mobile robot (3rd example), or achieved through human intervention. Once the forks are in position under the pallet, the jack can be either configured to be activated by the mobile robot (3rd example) or activated by a human to have the forks lift the pallet along with the object resting on the pallet. Once the payload is lifted, the jack can be moved or retracted towards the central wall by the mobile robot (3rd example) or by human intervention. When the jack is retracted towards the central wall, the forks can be lowered by the mobile robot (3rd example) or by a human so as to lower the payload and let the payload rests on a platform of the mobile robot (3rd example). In the present example, this platform is formed by the top portions of the first side wall and the second side wall.

The first side wall and the second side wall of the mobile robot (3rd example) may be configured to have a height that is lower than the maximum height that the forks 1706 of the jack can be raised. Compared to the examples of the mobile robots 100 and 800, the mobile robot (3rd example) is configured to carry heavier load than the mobile robots 100 and 800. Hence, the height of the first side wall and the second side wall of the mobile robot (3rd example) should be made lower (compared to mobile robots 100 and 800) so as to provide lesser time and effort to lift the payload to place on the mobile robot (3rd example). The width of the first side wall and second side wall of the mobile robot (3rd example) can be made with sufficient width to have a stable base for placing the object on the platform formed by the top portions of the first side wall and the second side wall respectively. Compared to the examples of the mobile robot 100 and 800, the width of the first side wall and the second side wall of the mobile robot (3rd example) should also be wider to provide a more stable base for carrying heavier load.

An attachment process of the mobile robot (3rd example) with a load (or payload) is described as follows.

In a step 1, the mobile robot (3rd example) moves towards the payload after receiving instructions wirelessly from a central control system to attach to the payload to transport the payload to an intended location according to the instructions. A front side of the mobile robot (3rd example) is facing the payload as the mobile robot is moving towards the payload.

In a step 2, when the mobile robot (3rd example) is moved to an area surrounding the payload, the mobile robot (3rd example) detects the presence of the payload through load information received from the central control system, a Lidar sensor mounted at the front of the mobile robot (3rd example), and/or one or more mounted cameras scanning the environment for one or more visual markers (e.g. machine-readable optical code) of the payload such as a QR code.

At a step 3, alignment of the mobile robot (3rd example) with the payload begins when detecting the presence of the payload.

Subsequently, at a step 4, after alignment at step 3, the mobile robot (3rd example) rotates 180 degrees to have its rear portion face the payload.

In a step 5, the mobile robot (3rd example) then reverses itself closer to the payload to engage the payload. In the present example, when the mobile robot (3rd example) detects contact with the payload after reversing itself sufficiently, for example via a sensor (e.g. using one or more cameras and vision techniques, a pressure sensor to detect contact pressure, infrared sensor to detect load distance from the central wall, use of a locking mechanism (e.g. 504 in Fig. 5 or 1400 in Fig. 14) on the central wall to detect load engagement with the mobile robot (3rd example), etc.), the mobile robot (3rd example) autonomously moves the attachment members and pushes the jack such that the forks of the jack are moved underneath the pallet of the payload. In another example, it could be that the mobile robot (3rd example) relies on information gathered from the one or more visual markers (e.g. machine-readable optical code) of the payload such as a QR code to determine how much to reverse and adjust itself to engage the payload. In the present example, the jack has wheels to facilitate its movement.

In a step 6, upon the jack being fully extended to one end of the pair of tracks and have the forks moved sufficiently under the pallet, the mobile robot (3rd example) activates the jack to raise the forks to lift the pallet along with the object resting on the pallet. The forks are said to be in an elevated configuration when they are raised to lift up the payload. Once the forks are lifted to a predetermined height, the mobile robot (3rd example) moves its body and reverses itself so that the jack along with the payload are residing within the space, and the jack remains stationary when the mobile robot (3rd example) is moving. This predetermined height can be determined from load information provided by the central control system, or from load information detected by the mobile robot (3rd example), for example, from a machine readable optical code provided on the payload, when the mobile robot (3rd example) locates the payload. Both the jack and the payload will reside within the space after the mobile robot (3rd example) is reversed. In another example, the mobile robot (3rd example) may move the jack and the payload into the space instead, however, this is a less preferred option as the mobile robot (3rd example) has to use more energy to move the jack and the payload compared to moving itself.

At a step 7, the mobile robot subsequently activates the jack to lower the forks into a non-elevated configuration, and the pallet rests on the platform formed by the top portions of the first side wall and the second side wall of the mobile robot (3rd example). Thereafter, the mobile robot (3rd example) is ready to transport the payload to the intended location.

The mobile robot 100 in Fig. 1 and 800 in Fig. 8, and the mobile robot (3rd example) described above are not limited to the specific configurations and operations as described above. In other examples, mobile robots with similar configurations and operations are also applicable.

In some examples of the present disclosure, for applications that require additional sensing for the mobile robot to perform its job, the payload to be attached to the mobile robot can be configured to have the relevant sensors to detect the surrounding environment. For instance, in the case that the payload is a floor scrubber, there can be sensors like cameras mounted on the payload to detect the floor condition so that a processor or controller on board the mobile robot can determine when to turn on or off a vacuum cleaning function of the floor scrubber and when to adjust the vacuum cleaning strength.

An apparatus of examples of the present disclosure may have the following advantages.

With the unique shape of the apparatus, payloads configured to be moveable (e.g. by attaching castor wheels) can be attached to the apparatus while these payloads are resting on the ground. Such moveable payloads can be attached without requiring to be first raised to a height beyond a top surface of the apparatus to place the payload on the top surface. In some conventional applications, a payload has to be lifted up to be placed or mounted (typically with human intervention) on a mobile robot and the entire weight of the payload is on the mobile robot. Such lifting is not required in the case of some examples of the present disclosure.

A mobile robot according to such examples of the present disclosure can also transport heavier loads since the mobile robot does not have to carry the entire weight of the payload. There is also time saved in attaching the payload to the mobile robot since there is no need to raise up the payload to place on a top surface of the mobile robot.

Different payloads can be easily attached to or detached from the mobile robot depending on the application, either manually (with human intervention) or autonomously (i.e. machine initiated).

An example of the apparatus of the present disclosure (e.g. the mobile robot 100, 800, and the mobile robot (3rd example) described with reference to the earlier figures) may have the following components in electronic communication via a bus:
1. optionally, a display (e.g. the display in the control panel 114 in Fig. 1 or 808 in Fig. 8);
2. non-volatile memory and/or non-transitory computer readable medium;
3. random access memory ("RAM");
4. N number of processing components (i.e. "one or more controllers", "one or more processors" or "one or more central processing units");
5. a transceiver component that includes N number of transceivers for Internet/Intranet use, and/or Wireless Network communications;
6. optionally, user controls i.e. user input devices;
7. optionally, image capturing components;
8. optionally, audio signal capturing components (e.g. microphone);
9. optionally, audio speakers, or sound producing devices to, for example, indicate operation status;
10. where required, one or more sensors and/or components for alignment purposes, obtaining information from a machine readable optical code and/or Radio Frequency Identification tag, and/or navigation/area mapping purposes;
11. optionally, Input/Output interfaces for connecting to the user input devices (such as mouse, joystick, keyboard, sensors for detecting user gestures, and the like), the audio speakers, display, image capturing components and/or audio signal capturing components;
12. optionally, one or more electrical connector for supplying power to or receiving power from the load and/or for data communication (e.g. for controlling operations of the load) with the attached load;
13. optionally, indicator light or lights for alerting and/or status notification purposes.

The display generally operates to provide a presentation of graphical content (e.g. graphical user interface) to a user, and may be realized by any of a variety of displays (e.g., CRT, LCD, HDMI, micro-projector and OLED displays). The display may be a touchscreen.

In general, the non-volatile memory functions to store (e.g., persistently store) data and executable code including code that is associated with the functional components of the mobile robot. In some cases, for example, the non-volatile memory includes bootloader code, modem software, operating system code, file system code, as well as other codes well known to those of ordinary skill in the art that are not depicted for simplicity. For example, the mobile robot 100 or 800, or the mobile robot (3rd example) may be programmed with self navigation/mapping code, code to facilitate the docking/undocking processes of the mobile robot 100 or 800 or the mobile robot (3rd example) with a charging station (e.g. 110 in Figs. 1 and 16) for charging up the power supply of the mobile robot 100 or 800, or the mobile robot (3rd example), code to control alignment process of the mobile robot 100 or 800, or the mobile robot (3rd example) with the respective loads 116, 118, 120, 122, 302, or 804 , code to provide power to the respective load from the power supply of the mobile robot 100 or 800, or the mobile robot (3rd example), code to control the locking mechanism 1400 of Fig. 14 for locking to the respective load, and code to control or operate specific loads. In the case of the mobile robot (3rd example), the jack can also be deemed as the load and power can be supplied to the jack (if required) for jack operation, and the mobile robot (3rd example) may be programmed with code to activate the jack to lift or lower loads.

In many implementations, the non-volatile memory is realized by flash memory (e.g., NAND or NOR memory), but it is certainly contemplated that other memory types may be utilized as well. Although it may be possible to execute the code from the non-volatile memory, the executable code in the non-volatile memory is typically loaded into RAM and executed by one or more of the N processing components.

One or more computer programs may be stored on any machine or computer readable medium that may be non-transitory in nature. The computer readable medium may include storage devices such as magnetic or optical disks, memory chips, or other storage devices suitable for interfacing with the mobile robot. The machine or computer readable medium may also include a hard-wired medium such as exemplified in the Internet system, or wireless medium such as exemplified in the Wireless LAN (WLAN) system.

The N processing components (or "one or more processors") in connection with RAM generally operate to execute the instructions stored in non-volatile memory to effectuate the functional components. As one skilled in the art (including ordinarily skilled) will appreciate, the N processing components may include a video processor, modem processor, DSP, graphics processing unit (GPU), and other processing components.

The transceiver component may include N transceiver chains, which may be used for communicating with external devices via wireless networks. Each of the N transceiver chains may represent a transceiver associated with a particular communication scheme. For example, each transceiver may correspond to protocols that are specific to local area networks, cellular networks (e.g., a WIFI network, a CDMA network, a GPRS network, a UMTS networks), and other types of communication networks. In some implementations, the communication of the transceiver component with communication networks enables a location of connected devices to be determined.

Examples of the present disclosure may have the following features.

An apparatus (e.g. 100 in Fig. 1, and 800 in Fig. 8, and the mobile robot (3rd example)) for transporting a load (e.g. 116, 118, 120 and 122 in Fig. 1, 302 in Fig. 3, and 804 in Fig. 8), wherein the apparatus comprises:
a power supply;
one or more parts for mobility (e.g. 126 in Fig. 1);
a driving mechanism for driving the one or more parts for mobility to move the apparatus;
a body comprising a central wall (e.g. 130 in Fig. 1), a first side wall (e.g. 128 in Fig. 1) and a second side wall (e.g. 132 in Fig. 1), wherein the first side wall and the second side wall extend away from the central wall such that a surface (e.g. 404 in Fig. 4) of the central wall, a surface (e.g. 518 in Fig. 5) of the first side wall and a surface (e.g. 520 in Fig. 5) of the second side wall form a boundary defining a space (e.g. 102 in Fig. 1) for residing a load or a portion of the load;
an attachment mechanism for attaching to the load, wherein the attachment mechanism comprises a pair of attachment members for engaging the load, and the pair of attachment members comprises a first attachment member (e.g. 402 in Fig. 4 and 826 in Fig. 13) mounted to the surface of the first side wall and a second attachment member (e.g. 502 in Fig. 5 and 1304 in Fig. 13) mounted to the surface of the second side wall; and
a processor configured to execute instructions in a memory to operate the apparatus to:
   activate the driving mechanism to move the apparatus to transport the attached load to an intended location according to the instructions.

The apparatus may be operable to:
during attachment to the load,
activate the driving mechanism to move the apparatus to receive the load or the portion of the load into the space, and
activate the attachment mechanism to make the first attachment member and the second attachment member attach to the load by moving the first attachment member and the second attachment member to engage opposite sides of the load or opposites sides of the portion of the load residing in the space and hold the load or the portion of the load in the space.

The attachment mechanism may comprise more than one of the pair of attachment members (e.g. 506 and 508 in Fig. 5, and 1502 in Fig. 15), wherein each of the first attachment members and the second attachment members of each of the pair of attachment members is extendable upon activation of the attachment mechanism to engage the load or the portion of the load according to a contour of the load or the portion of the load.

The apparatus may comprise:
one or more sensors (e.g. 104 in Fig. 1); and
the apparatus is operable to:
   receive input from the one or more sensors to align the apparatus with the load prior to activating the attachment mechanism to attach to the load or the portion of the load.

The one or more sensors may be configured to read a machine-readable optical code and/or a Radio-Frequency Identification tag provided on the load to obtain information to determine which of the more than one pairs of attachment members is to be activated to extend to contact the load or the portion of the load to fit the contour of the load or the portion of the load.

The one or more sensors may be configured to read a machine-readable optical code and/or a Radio-Frequency Identification tag provided on the load to obtain location data of the load relative to the apparatus to facilitate the alignment of the apparatus with the load.

The apparatus may comprise a locking mechanism (e.g. 504 in Fig. 5 and 1400 in Fig. 14), wherein the locking mechanism comprises:
a latching member (e.g. 510, 514, and 512 in Fig. 5, and 1406 in Fig. 14) with a configuration corresponding to one or more receiving members (e.g. 602 in Fig. 6 and 822 in Fig. 8) residing in the load to facilitate the one or more receiving members to receive the latching member to lock the apparatus to the load, wherein the apparatus is operable to:
move the latching member to lock the apparatus to the load.

The latching member may comprise one or more hooks (e.g. 510, 514, and 512 in Fig. 5) and the one or more receiving members comprise one or more rods (e.g. 602 in Fig. 6) for the one or more hooks to latch on.

The latching member may comprise one or more pins (e.g. 1406 in Fig. 14) and the one or more receiving members comprise one or more slots (e.g. 822 in Fig. 8) for receiving the one or more pins to lock the apparatus to the load.

The apparatus may comprise:
an electrical connector configured to connect to the load to provide power to the load when the apparatus is attached to the load.

The electrical connector may comprise the latching member, and electrical connection to supply power to the load is made when the latching member is received by the one or more receiving members.

The load may comprise one or more of the following:
a trolley or moveable cart (e.g. 116 in Fig. 1 and 302 in Fig. 3) for carrying one or more objects;
a jack (e.g. 118 in Fig. 1) for lifting an object;
a cleaning device (e.g. 120 in Fig. 1) for cleaning surfaces in an environment and the load is to be towed by the apparatus to clean the surfaces of the environment; and
an Ultraviolet (UV) illumination top (e.g. 122 in Fig. 1) for sanitization using UV.
The cleaning device may be a floor scrubber (e.g. 120 in Fig. 1) to be towed by the apparatus to scrub the floor.

The attachment mechanism may comprise:
a pair of tracks with each track mounted on the surface of the first side wall and the surface of the second side wall respectively, wherein the first and second attachment members are configured to be mounted to the pair of tracks such that the first and second attachment members are slidable along the pair of tracks,
wherein the first and second attachment members are slidable along the pair of tracks to move the attached load residing in the space in a direction away from the central wall or towards the central wall.

When the load comprises a jack (e.g. 118 in Fig. 1) for lifting an object, the jack may comprise one or more lifting forks and the first and second attachment members are attached to the load, wherein the first and second attachment members are slidable along the pair of tracks to move the one or more lifting forks of the jack under an object so as to enable the object to be lifted upon activation of the jack to lift the object.

The surface of the central wall, the surface of the first side wall and the surface of the second side wall may form a U shape.

In the specification and claims, unless the context clearly indicates otherwise, the term "comprising" has the non-exclusive meaning of the word, in the sense of "including at least" rather than the exclusive meaning in the sense of "consisting only of'. The same applies with corresponding grammatical changes to other forms of the word such as "comprise", "comprises" and so on.

While the invention has been described in the present disclosure in connection with a number of examples and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

1. An apparatus for transporting a load, wherein the apparatus comprises:
a power supply;
one or more parts for mobility;
a driving mechanism for driving the one or more parts for mobility to move the apparatus;
a body comprising a central wall, a first side wall and a second side wall, wherein the first side wall and the second side wall extend away from the central wall such that a surface of the central wall, a surface of the first side wall and a surface of the second side wall form a boundary defining a space for residing a load or a portion of the load;
an attachment mechanism for attaching to the load, wherein the attachment mechanism comprises a pair of attachment members for engaging the load, and the pair of attachment members comprises a first attachment member mounted to the surface of the first side wall and a second attachment member mounted to the surface of the second side wall; and
a processor configured to execute instructions in a memory to operate the apparatus to:
activate the driving mechanism to move the apparatus to transport the attached load to an intended location according to the instructions.

2. The apparatus as claimed in claim 1, wherein the apparatus is operable to:
during attachment to the load,
activate the driving mechanism to move the apparatus to receive the load or the portion of the load into the space, and
activate the attachment mechanism to make the first attachment member and the second attachment member attach to the load by moving the first attachment member and the second attachment member to engage opposite sides of the load or opposites sides of the portion of the load residing in the space and hold the load or the portion of the load in the space.

3. The apparatus as claimed in claim 1 or 2, wherein the attachment mechanism comprises more than one of the pair of attachment members, wherein each of the first attachment members and the second attachment members of each of the pair of attachment members is extendable upon activation of the attachment mechanism to engage the load or the portion of the load according to a contour of the load or the portion of the load.

4. The apparatus as claimed in claim 1, 2 or 3, wherein the apparatus comprises:
one or more sensors; and
the apparatus is operable to:
receive input from the one or more sensors to align the apparatus with the load prior to activating the attachment mechanism to attach to the load or the portion of the load.

5. The apparatus as claimed in claim 4, wherein the one or more sensors is configured to read a machine-readable optical code and/or a Radio-Frequency Identification tag provided on the load to obtain information to determine which of the more than one pairs of attachment members is to be activated to extend to contact the load or the portion of the load to fit the contour of the load or the portion of the load.

6. The apparatus as claimed in claim 4 or 5, wherein the one or more sensors is configured to read a machine-readable optical code and/or a Radio-Frequency Identification tag provided on the load to obtain location data of the load relative to the apparatus to facilitate the alignment of the apparatus with the load.

7. The apparatus as claimed in any one of the preceding claims, wherein the apparatus comprises a locking mechanism, wherein the locking mechanism comprises:
a latching member with a configuration corresponding to one or more receiving members residing in the load to facilitate the one or more receiving members to receive the latching member to lock the apparatus to the load, wherein the apparatus is operable to:
move the latching member to lock the apparatus to the load.

8. The apparatus as claimed in claim 7, wherein the latching member comprises one or more hooks and the one or more receiving members comprise one or more rods for the one or more hooks to latch on.

9. The apparatus as claimed in claim 7 or 8, wherein the latching member comprises one or more pins and the one or more receiving members comprise one or more slots for receiving the one or more pins to lock the apparatus to the load.

10. The apparatus as claimed in any one of the preceding claims, wherein the apparatus comprises:
an electrical connector configured to connect to the load to provide power to the load when the apparatus is attached to the load.

11. The apparatus as claimed in claim 10, wherein the electrical connector comprises the latching member, and electrical connection to supply power to the load is made when the latching member is received by the one or more receiving members.

12. The apparatus as claimed in any one of the preceding claims, wherein the load comprises one or more of the following:
a trolley or moveable cart for carrying one or more objects;
a jack for lifting an object;
a cleaning device for cleaning surfaces in an environment and the load is to be towed by the apparatus to clean the surfaces of the environment; and
an Ultraviolet (UV) illumination top for sanitization using UV.

13. The apparatus as claimed in any one of the preceding claims, wherein the attachment mechanism comprises:
a pair of tracks with each track mounted on the surface of the first side wall and the surface of the second side wall respectively, wherein the first and second attachment members are configured to be mounted to the pair of tracks such that the first and second attachment members are slidable along the pair of tracks,
wherein the first and second attachment members are slidable along the pair of tracks to move the attached load residing in the space in a direction away from the central wall or towards the central wall.

14. The apparatus as claimed in claim 13, wherein when the load comprises a jack for lifting an object, the jack comprises one or more lifting forks and the first and second attachment members are attached to the load, wherein the first and second attachment members are slidable along the pair of tracks to move the one or more lifting forks of the jack under an object so as to enable the object to be lifted upon activation of the jack to lift the object.

15. The apparatus as claimed in any one of the preceding claims, wherein the surface of the central wall, the surface of the first side wall and the surface of the second side wall form a U shape.
